# EUROPÄISCHE PATENTSCHRIFT

(11) **EP 0 663 069 B1**
(45) Veröffentlichungstag und Bekanntmachung des Hinweises auf die Patenterteilung: **02.11.2005**
(21) Anmeldenummer: 94924822.3
(22) Anmeldetag: 29.07.1994
(51) Int. Cl.: G01N 21/90

(54) **INSPEKTIONSMASCHINE**
INSPECTION MACHINE
MACHINE D'INSPECTION

(30) Priorität: 30.07.1993 DE 9311405 U; 01.09.1993 DE 9313115 U
(43) Veröffentlichungstag der Anmeldung: 19.07.1995
(60) Teilanmeldung: 01112238.9
(73) Patentinhaber: KRONES AG, 93068 Neutraubling (DE)
(72) Erfinder: KRONSEDER, Hermann, D-93086 Wörth (DE); HÄRING, Franz, D-93073 Neutraubling (DE); GRIESBECK, Karl, D-93053 Regensburg (DE); RUPPELT, Wolfgang, D-93176 Beratzhausen (DE)
(74) Vertreter: Grünecker, Kinkeldey, Stockmair & Schwanhäusser Anwaltssozietät
(86) Internationale Anmeldenummer: PCT/EP1994/002523
(87) Internationale Veröffentlichungsnummer: WO 1995/004267

(56) Entgegenhaltungen:
- EP-A- 0 037 694
- US-A- 3 932 042
- US-A- 4 025 201
- US-A- 4 280 624
- US-A- 4 586 080
- US-A- 5 256 871

## Beschreibung

Die Erfindung betrifft eine Inspektionsmaschine für durchleuchtbare Flaschen oder dgl. gemäß dem Oberbegriff des Anspruchs 1.

In Getränkeabfüllinien werden derartige Inspektionsmaschinen eingesetzt, um vor dem Befüllen beschädigte oder unsaubere Flaschen zu erkennen und auszuscheiden. Zur Überprüfung des Seitenwandbereichs der Flaschen sind Inspektionssysteme bekannt, die zur Bildaufnahme der Flaschenseitenwand eine kontinuierliche Drehung der Flaschen um ihre Hochachse erfordern. Während der Drehbewegung wird von der Bildaufnahmeeinrichtung, z.B. Zeilenkamera, im wesentlichen nur die Flaschenmitte entlang einer vertikalen Linie aufgenommen. Das durch dieses Abwicklungsverfahren erhaltene Bild einer Flaschenseitenwand zeichnet sich durch eine hohe Aufnahmequalität aus, da praktisch keine optischen Verzerrungen durch die Seitenwandkrümmung auftreten.

Andererseits erfordert die Drehung der Flaschen zur Bildaufnahme einen nicht unerheblichen mechanischen Aufwand (Karussell mit Drehtellern o.ä.).

Außerdem ist bereits eine Inspektionsvorrichtung bekanntgeworden, die ohne eine Flaschendrehung während der Bildaufnahme des Seitenwandbereichs auskommt (DE-AS 26 17 457). Dabei wird der Seitenwandbereich von nur einer Kamera aus zwei verschiedenen Richtungen aufgenommen. Einerseits besitzt eine derartige Inspektionseinrichtung einen vergleichsweise einfachen Aufbau, andererseits müssen aber durch die Oberflächenkrümmung der Flasche verursachte optische Verzerrungen in den Randbereichen der aufgenommenen Bilder in Kauf genommen werden, wodurch die Bildauswertung zur Erkennung von Schmutz oder Beschädigungen erschwert wird.

Eine weitere Inspektionsvorrichtung für Flaschen ist aus EP-A-0 037 694 bekannt, wobei diese Vorrichtung mit einer Scannerbeleuchtung arbeitet. Der von einer punktförmigen Lichtquelle ausgehende Lichtstrahl wird durch halbdurchlässige Spiegel in drei aus verschiedenen Richtungen auf eine zu prüfende Flasche auftreffende Lichtstrahlen aufgeteilt. Alle Spiegel sind zwischen der Lichtquelle und der Flasche positioniert. Auf der der Lichtquelle gegenüberliegenden Seite der Flaschenförderbahn ist in Verlängerung jedes durch eine transparente Flasche dringenden Lichtstrahls jeweils eine eigene Bildaufnahmeeinrichtung angeordnet. Um die Flaschen über ihre gesamte Höhe inspizieren zu können, wird der von der Lichtquelle ausgehende Lichtstrahl vertikal bewegt.

Demzufolge liegt der Erfindung, aus gehend von dem zuletzt genannten Stand der Technik, die Aufgabe zugrunde, eine Inspektionsvorrichtung zur Seitenwandkontrolle von Flaschen oder dgl. anzugeben, die nur wenig Aufwand erfordert und eine gute Bildqualität liefert.

Die Aufgabe wird durch die im kennzeichnenden Teil des Anspruchs 1 angegebenen Merkmale gelöst.

Durch eine Spiegelanordnung, die gleich lange Strahlengänge vom Seitenwandbereich einer zu prüfenden Flasche bis zur Bildaufnahmeeinrichtung (CCD-Kamera) liefert, kann sichergestellt werden, daß die von den einzelnen Strahlengängen gelieferten Abbildungen gleich groß sind, wodurch Schwierigkeiten bei der Bildauswertung vermieden werden.

Eine besonders kompakte Bauweise wird durch eine in den Ansprüchen 12 und 13 angegebene Ausgestaltung der Inspektionseinrichtung ermöglicht.

Ferner kann der Inspektionsstation eine weitere Bildaufnahmeeinrichtung (CCD-Ramera) zur Kontrolle der Kontur, Höhe oder Farbe der die Inspektionsstation passierenden Flaschen zugeordnet werden. Diese zweite Bildaufnahmeeinrichtung kann so positioniert werden, daß ihr Strahlengang ebenfalls den Kreuzungsbereich der Strahlengänge der Seitenwandkontrolle schneidet, wodurch vorteilhafterweise durch nur eine Ansteuerung die Bildaufnahme beider Bildaufnahmeeinrichtungen gleichzeitig auslösbar ist.

Vorteilhafte Weiterbildungen der Inspektionsmaschine sind Gegenstand der Unteransprüche.

Nachfolgend werden Ausführungsbeispiele anhand der Figuren erläutert. Es zeigt:
- Fig. 1: eine schematische Draufsicht auf eine Inspektionsmaschine mit einer Inspektionsstation zur Seitenwandkontrolle,
- Fig. 2: eine vergrößerte Darstellung der Inspektionsstation zur Seitenwandkontrolle nach Fig. 1,
- Fig. 3: eine erste Seitenansicht der Inspektionsstation nach Fig. 2 in Flaschenförderrichtung betrachtet,
- Fig. 4: eine zweite Seitenansicht der Inspektionsstation nach Fig. 2 in Förderrichtung der Flaschen betrachtet,
- Fig. 5: eine dritte Seitenansicht der Inspektionsstation nach Fig. 2 in Förderrichtung der Flaschen betrachtet,
- Fig. 6: eine schematische Draufsicht auf eine Inspektionsstation zur Seitenwandkontrolle mit einer von der Fig. 2 abweichenden Spiegelanordnung und
- Fig. 7: eine schematische Draufsicht auf eine Inspektionsmaschine mit zwei Inspektionsstationen zur Seitenwandkontrolle von Flaschen.

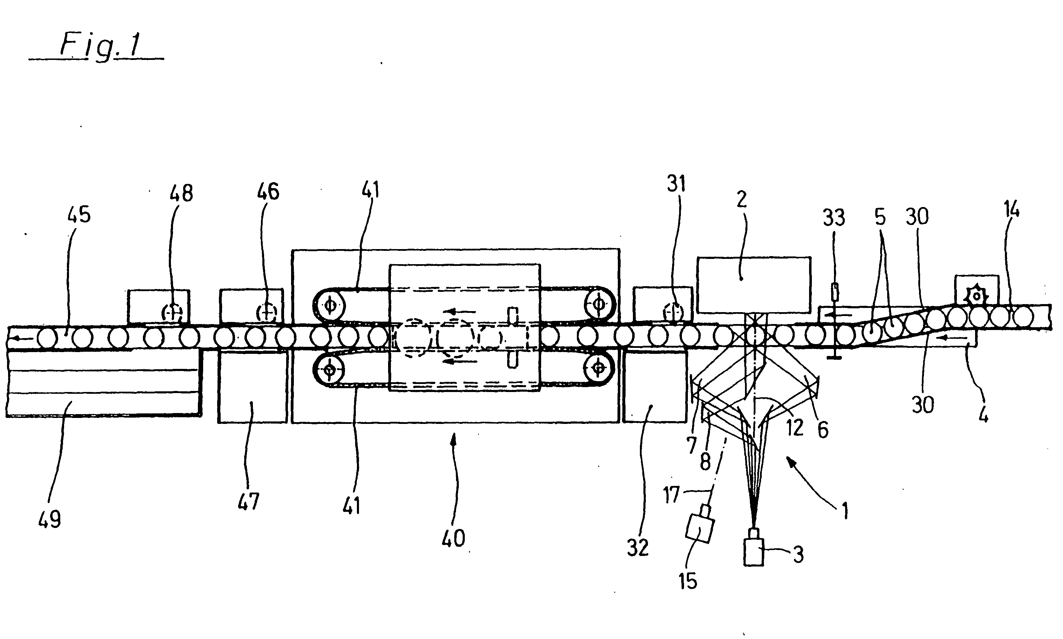

Wie aus der in der Fig. 1 schematisch dargestellten Draufsicht erkennbar ist, werden die zu prüfenden Flaschen 5 durch einen kontinuierlich antreibbaren Zuförderer 14 der Inspektionsmaschine zugeführt. Die durch den Zuförderer 14, z.B. ein Plattenförderband, in einer geschlossenen Reihe aufrechtstehend transportierten Flaschen 5 werden durch Führungsgeländer 30 auf ein parallel angeordnetes, mit erhöhter Geschwindigkeit synchron zum Zuförderer 14 angetriebenes Förderband 4 überführt, wobei durch den Geschwindigkeitssprung Lücken bzw. Zwischenabstände im Flaschenstrom erzeugt werden. Diese Zwischenabstände sind zur Durchführung der Seitenwandkontrolle notwendig.

Die Seitenwandkontrolle erfolgt durch eine am Förderband 4 angeordnete Inspektionsstation 1, die im wesentlichen aus einem diffuses Licht abstrahlenden Leuchtschirm 2, einer Kamera 3 und zwischen dem Förderband 4 und der Kamera 3 angeordneten Spiegeln zur Erzeugung der Strahlengänge 6, 7 und 8 besteht. Außerdem ist die Inspektionsstation 1 mit einer zweiten Kamera 15 zur Kontur-, Höhen- und/oder Farberkennung ausgestattet. In Förderrichtung gesehen hinter der Inspektionsstation 1 ist eine ansteuerbare Auswerfereinrichtung 31 an einer Seite des Transportbandes 4 plaziert, der gegenüberliegend ein Auffangbehälter 32 zugeordnet ist. Mit der Auswerfereinrichtung 31, z.B. ein quer zur Förderrichtung impulsartig vor- und zurücksteuerbarer Pusher oder Stößel, können durch die zweite Kamera 15 erkannte Fremdflaschen, die beispielsweise einen bestimmten Durchmesser oder eine vorgebbare Höhe überschreiten, zum Schutz nachfolgender Inspektionseinrichtungen vom Förderband 4 entfernt werden. Die Ansteuerung der beiden Kameras 3, 15 und der Auswerfereinrichtung 31 erfolgt unter Berücksichtigung der Fördergeschwindigkeit durch eine der Inspektionsstation 1 vorgeordnete Triggerlichtschranke 33.

Der Inspektionsstation 1 zur Seitenwandkontrolle ist außerdem eine zweite Inspektionsstation 40 nachgeordnet. In dieser Inspektionsstation können die Flaschen 5 durch zwei gegenüberliegend angeordnete, synchron zum Förderband 4 antreibbare Riemen 41 seitlich an der Mantelfläche eingeklemmt und bodenfrei über mehrere Inspektionseinrichtungen zur Boden-, Mündungskontrolle oder Restflüssigkeitserkennung transportiert werden. Nach Abschluß dieser Inspektionsvorgänge werden die Flaschen von den Riemen 41 auf ein nachfolgendes Förderband 45 abgestellt und freigegeben.

Hinter der zweiten Inspektionsstation 40 ist wiederum eine ansteuerbare Auswerfereinrichtung 46 mit einem gegenüberliegend am Transportband 45 angeordneten Auffangbehälter 47 plaziert, um durch die erste oder zweite Inspektionsstation 1, 40 als nicht weiterverwendbar erkannte Flaschen, z.B. mit Ausbrüchen an der Mündung, ausscheiden zu können. Dahinterliegend ist eine dritte Auswerfereinrichtung 48 zur Ausschleusung von evtl. nach einer erneuten Reinigung weiter verwendbaren Flaschen auf einen parallel zum Förderband 45 angeordneten Förderer 49 vorgesehen.

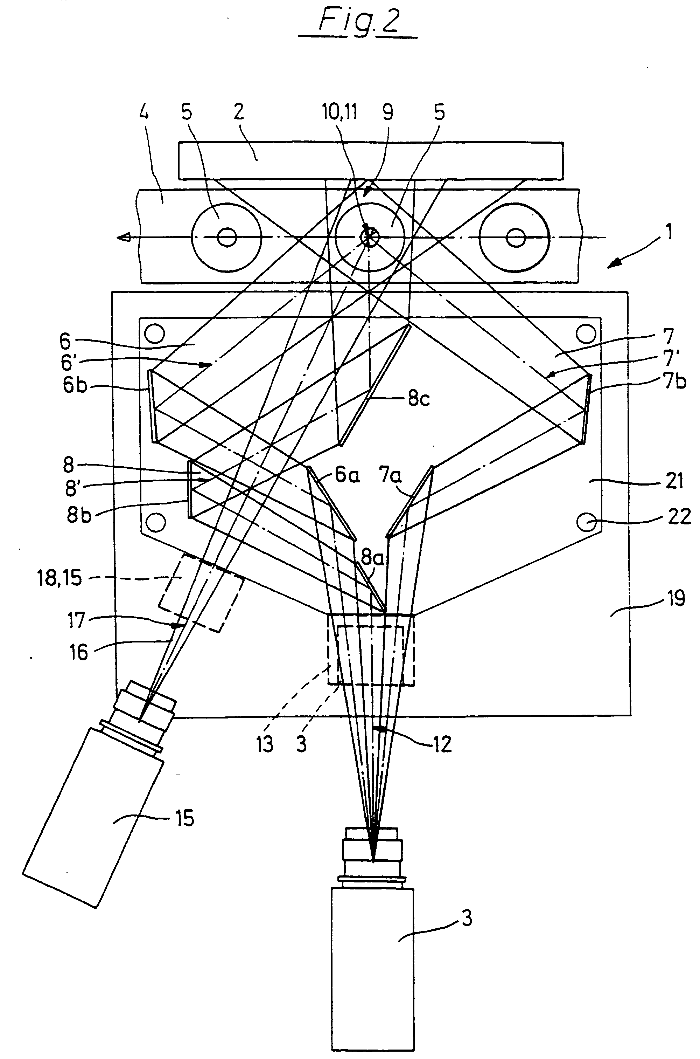

Aus der Fig. 2 ist die Anordnung der die drei Strahlengänge 6, 7, 8 erzeugenden Spiegel ersichtlich. Die beiden Strahlengänge 6 und 7 sind zur optischen Achse 12 der Kamera 3 symmetrisch ausgebildet bzw. angeordnet. Dementsprechend sind auch die den Strahlengang 7 bildenden Spiegel 7a und 7b symmetrisch zu den Spiegeln 6a und 6b des Strahlenganges 6 positioniert. Die beiden Spiegel 6b und 7b sind so zueinander ausgerichtet, daß sich die Strahlengänge 6 und 7 unter einem bestimmten Winkel, z.B. 60 Grad, bezogen auf die Mittelachsen 6' und 7' der Strahlengänge, in einem über dem Förderband 4 liegenden Kreuzungsbereich 9 treffen. Ein dritter Strahlengang 8 wird, ausgehend von der Kamera 3, durch drei Spiegel 8a, 8b, 8c so umgelenkt, daß die Mittelachse 8' dieses dritten Strahlenganges 8 im Kreuzungsbereich 9 den von den beiden Mittelachsen 6' und 7' eingeschlossenen Winkel halbiert. Der Spiegel 8c ist so positioniert, daß die in Fig. 2 dargestellte senkrechte Projektion der Mittelachse 8' an der gemeinsamen Schnittstelle 10 der drei Mittelachsen' 6', 7' und 8' sowohl normal zur Symmetrielinie 11 der zu prüfenden Flasche 5 als auch zur Förderrichtung des Förderbands 4 ausgerichtet ist. Die für die Seitenwandkontrolle zuständige Kamera 3 ist mit einem Flächenarray ausgestattet, auf dem die drei Strahlengänge 6, 7 und 8 nebeneinander abgebildet werden. Der Kamera 3 ist eine nicht dargestellte Auswerteinrichtung zugeordnet, die das von der Kamera aufgenommene Bild programmgesteuert auswertet. Das Auswertprogramm kann so gestaltet sein, daß von jedem Strahlengang jeweils nur der mittlere Bildbereich ausgewertet wird, während die Randbereiche ausblendbar sind bzw. ignoriert werden, um Ungenauigkeiten in den Randbereichen der aufgenommenen Bilder infolge der optischen Verzerrungen an den stark gekrümmten Flaschenrändern zu vermeiden.

Außerdem ist der Inspektionsstation 1 eine zweite Kamera 15 zur Kontrolle der Kontur- und/oder Höhe und/oder Farbe der zu prüfenden Flaschen zugeordnet. Diese zweite Kamera 15 ist so angeordnet, daß ihr Strahlengang 16 ungehindert zwischen den Spiegeln der Seitenwandkontrolleinrichtung hindurch auf eine sich gerade im Kreuzungsbereich 9 befindende Flasche 5 treffen kann. Insbesondere ist die optische Achse 17 der Kamera 15 so ausgerichtet, daß sie ebenfalls durch die gemeinsame Schnittstelle 10 der drei Strahlengänge 6, 7 und 8 der Seitenwandkontrolle verläuft. Dadurch sind die beiden Kameras 3 und 15 mit einem gemeinsamen Steuersignal zur gleichzeitigen Bildaufnahme ansteuerbar. Besonders günstig ist eine Anordnung des Strahlengangs 16 der Kamera 15, bei der die senkrechte Projektion der optischen Achse 17 die senkrechte Projektion der Mittelachse 8' bzw. die optische Achse 12 der Kamera 3 mit einem Winkel von ca. 25 Grad kreuzt.

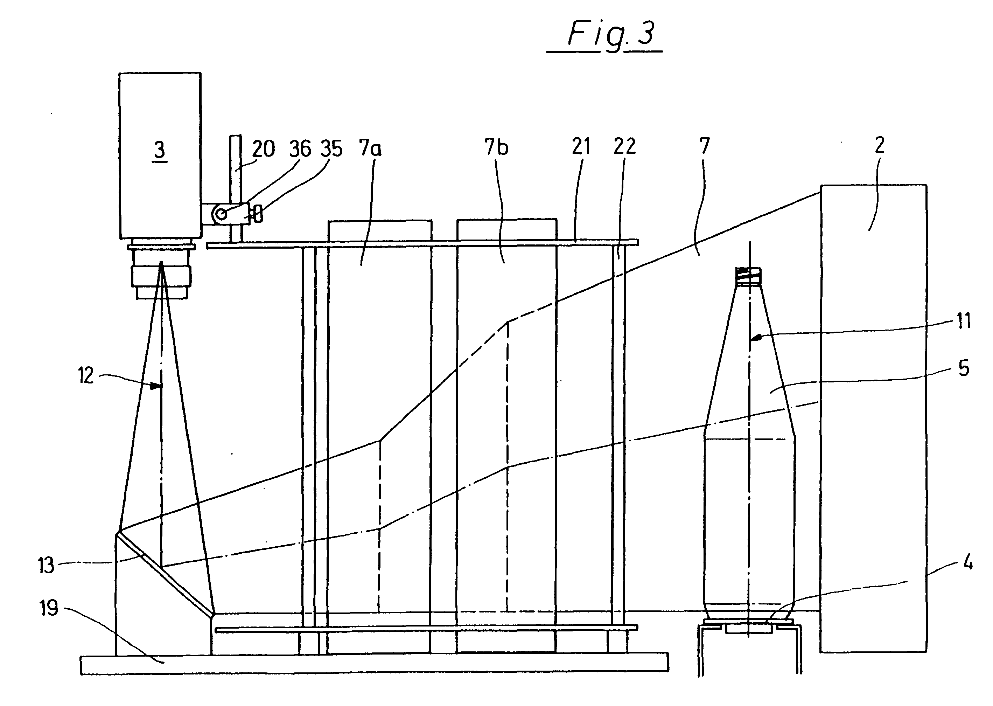

Abweichend von der Darstellung in Fig. 2 können die beiden Kameras 3 und 15 mit ihren optischen Achsen 12 und 17 senkrecht zur Förderebene der Flaschen stehend angeordnet werden. Diese Alternative ist in der Fig. 2 mit gestrichelten Umrißlinien angedeutet und in den Fig. 3 bis 5 dargestellt.

Diese Anordnung gestattet eine sehr kompakte, platzsparende Bauweise der Inspektionsstation 1, da der quer zum Förderband 4 erforderliche Abstand im Vergleich zur Ausführung nach Fig. 2 deutlich verkürzt werden kann.

In der in Fig. 3 dargestellten Seitenansicht der Fig. 2 sind zwecks der besseren Übersicht nur die Kamera 3 und die beiden dem Strahlengang 7 zugeordneten Spiegel 7a und 7b dargestellt. Eingezeichnet ist der Strahlverlauf der in Fig. 2 mit 7' bezeichneten Mittelachse. Die Positionierung der ebenen Spiegel 7a und 7b (und auch der übrigen Spiegel) erfolgt durch zwei mit Abstand zueinander parallel, jeweils in einer horizontalen Ebene liegende Positionierplatten 21, die durch Distanzstangen 22 auf einer Grundplatte 19 befestigt sind. Die Positionierplatten 21 besitzen der Dicke und Breite der Spiegel entsprechende Schlitze (siehe Fig. 2). Die Spiegel sind durch diese Schlitze von oben her einführbar und stehen mit ihrer unteren Kante auf der Grundplatte 19. Dadurch ist im Falle von Beschädigungen ein einfacher und schneller Austausch der Spiegel möglich.

Auf der oberen Positionierplatte 21 ist eine Führung 20 befestigt, an der die senkrecht stehend angeordnete Kamera 3 mittels einem Klemmstück 35 höhenverstellbar gehalten wird. Das Klemmstück besitzt außerdem ein Drehgelenk 36 zur Einstellung des Auftreffwinkels der optischen Achse 12 der Kamera 3 auf den darunter auf der Grundplatte 19 angeordneten Spiegel 13.

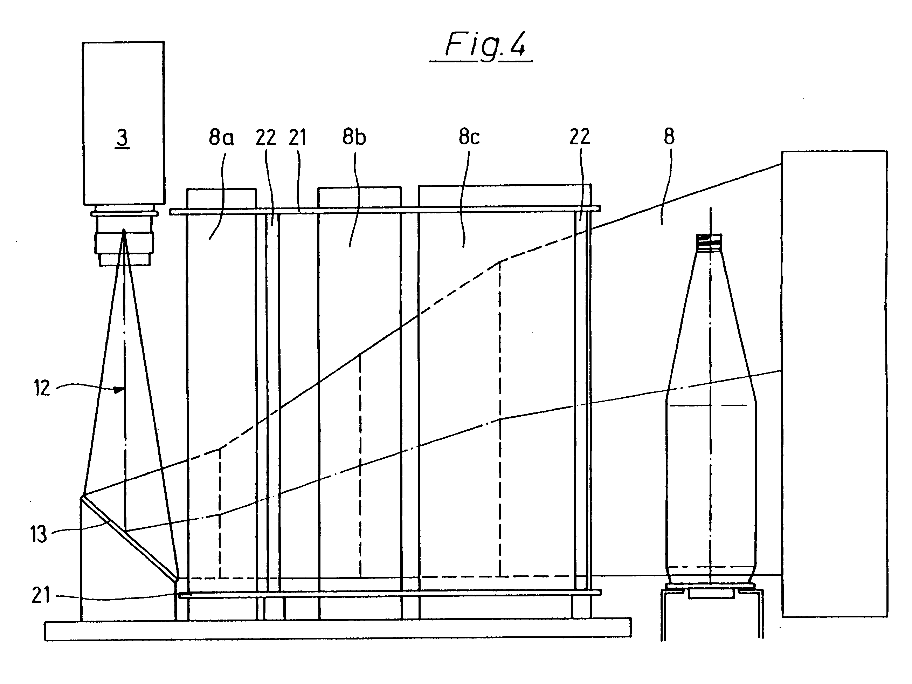

In Fig. 4 sind die dem mittleren Strahlengang 8 zugeordneten Spiegel 8a, 8b und 8c dargestellt, wobei ebenfalls zur besseren Übersicht alle übrigen Spiegel nicht eingezeichnet sind.

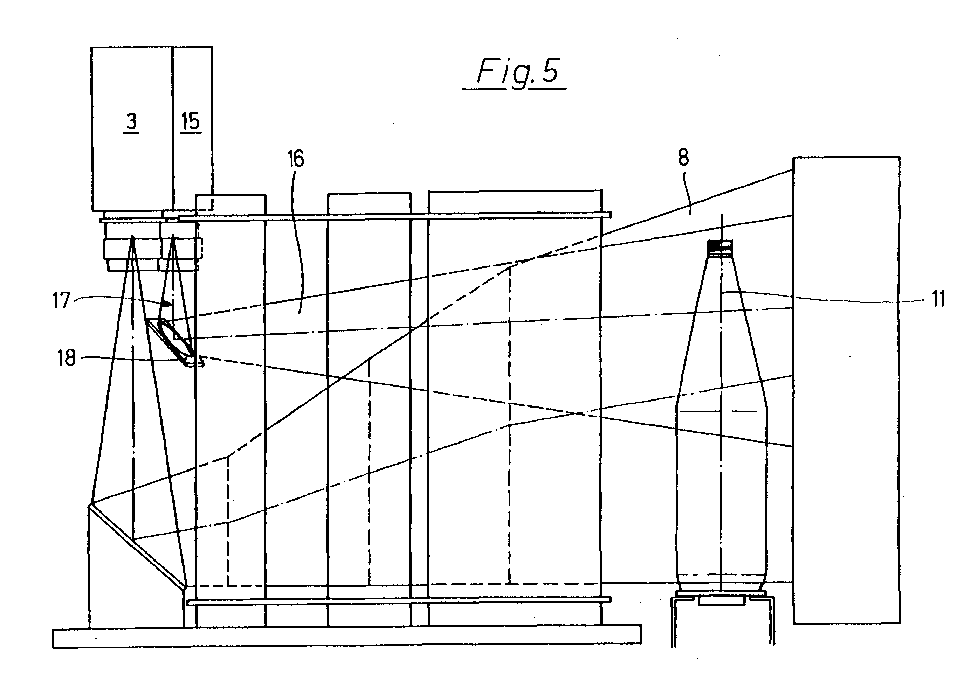

Die Fig. 5 entspricht weitgehend der Fig. 4, wobei zusätzlich die Kamera 15 zur Kontur- und Höhenerkennung mit ihrem Strahlengang 16 angedeutet ist. Wegen der senkrechten Anordnung der Kamera 15 ist ebenfalls ein den Strahlengang 16 aus der senkrechten Richtung quer zur Symmetrielinie 11 der zu prüfenden Flasche 5 umlenkender Spiegel 18 erforderlich. Die zweite Kamera 15 ist in nicht dargestellter Weise, ähnlich wie die Kamera 3, an der oberen Positionierplatte 21 einstellbar befestigt.

Zur Kontur- und Höhenkontrolle reicht die Erfassung des Schulter- und Kopfbereiches der Flaschen 5. Dadurch genügt im Vergleich zu den Strahlengängen der Seitenwandkontrolle eine kürzere Länge des Strahlengangs 17, so daß die Kamera 15 ohne zusätzliche Umlenkspiegel ähnlich nahe an der Flasche 5 angeordnet werden kann, wie die zur Seitenwandkontrolle dienende Kamera 3.

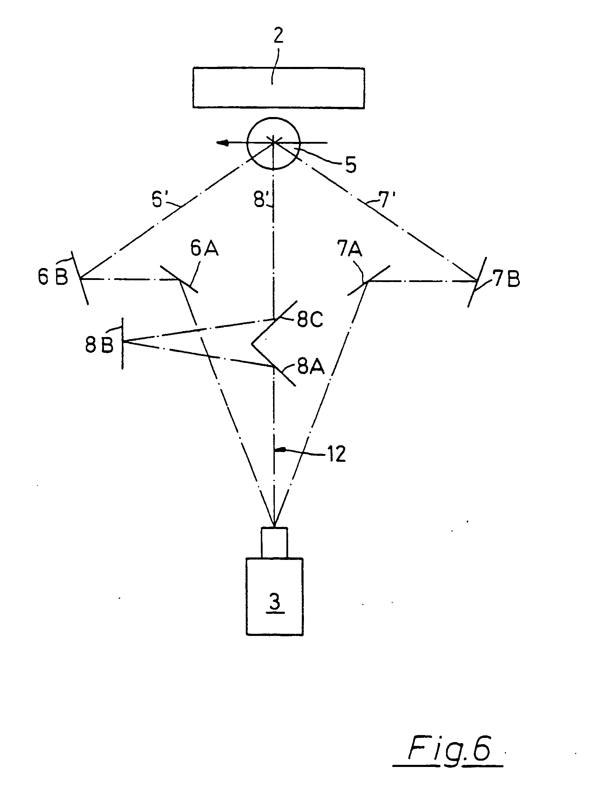

Die Fig. 6 zeigt eine alternative Spiegelanordnung zur Erzeugung der zur Seitenwandkontrolle erforderlichen Strahlengänge. Die dargestellte Spiegelanordnung erzeugt ebenfalls zwei zur optischen Achse 12 der Kamera 3 symmetrisch ausgebildete Strahlengänge 6 und 7, von denen nur die Mittelachsen 6'und 7' dargestellt sind. Zu diesem Zweck sind jeweils Spiegel 6A, 6B und 7A, 7B vorhanden, die mit einem ausreichenden Zwischenabstand zur optischen Achse 12 angeordnet sind, derart, daß die den dritten Strahlengang 8 bildenden Spiegel 8A, B, C vor den vorgenannten Spiegeln der beiden übrigen Strahlengänge plaziert werden können, und der zur Flasche 5 führende Abschnitt des Strahlengangs 8 zwischen den zu den Strahlengängen 6 bis 7 gehörenden Spiegeln ungehindert hindurchtreten kann.

Abweichend von den dargestellten Ausführungen sind auch Spiegelanordnungen denkbar und vorteilhaft, die zur Seitenwandkontrolle mehr als drei Strahlengänge erzeugen.

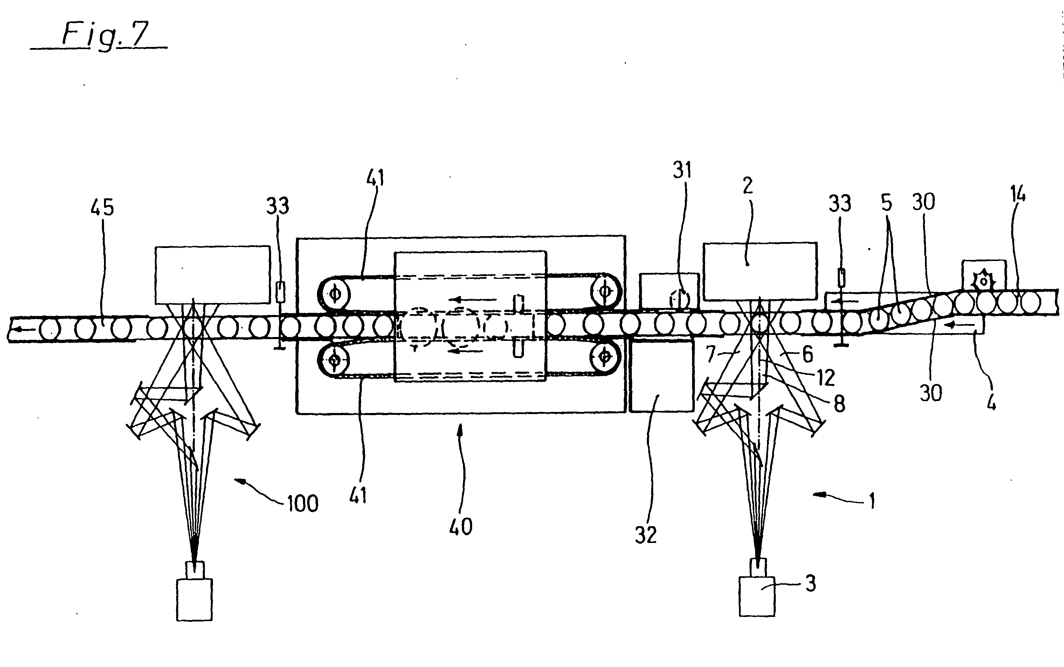

Die in Fig. 7 dargestellte Inspektionsmaschine besitzt grundsätzlich den gleichen mechanischen Aufbau wie die Inspektionsmaschine nach Fig. 1. Zusätzlich verfügt sie aber über eine Inspektionsstation 100 für eine zweite Seitenwandkontrolle der Flaschen 5. Diese Inspektionsstation 100 ist unmittelbar hinter den Riemen 41 der Inspektionsstation 40 am Förderband 45 angeordnet. Die Spiegelanordnung der Inspektionsstation 100 stimmt mit der der Inspektionsstation 1 überein. Beide Riemen 41 werden synchron zu den Förderbändern 4 und 45 angetrieben, allerdings mit einer geringen Geschwindigkeitsdifferenz zueinander. In Abhängigkeit der eingestellten Geschwindigkeitsdifferenz werden die Flaschen während der Überführung vom Förderband 4 auf das Förderband 45 um einen bestimmten Winkel, vorzugsweise ca. 90 Grad, um ihre Hochachse gedreht und anschließend ohne Eigendrehung durch die Inspektionsstation 100 geführt. Nachfolgend kann die Ausscheidung unbrauchbarer Flaschen 5 vorgenommen werden, wie vorhergehend zur Fig. 1 bereits erläutert wurde.

Die Geschwindigkeitsdifferenz zwischen den beiden Riemen 41 ist so einstellbar, daß bei einer Umstellung der Inspektionsmaschine auf Flaschen mit einem anderen Umfangsmaß der Drehwinkel der Flaschen beim Durchfahren der Riemenstrecke konstant 90 Grad beträgt. Zu diesem Zweck ist beispielsweise einer der beiden Riemen 41 antriebsmäßig mit den Förderbändern 4 und/oder 45 verbunden, während der zweite Riemen 41 über einen eigenen, regelbaren Antrieb mit einer programmierbaren Steuerung verfügt. Die Umstellung des Übersetzungsverhältnisses zwischen den beiden Riemen 41 kann dann auf Knopfdruck erfolgen.

Eine Seitenwandkontrolle mit zwei Inspektionsstationen 1 und 100 hat den Vorteil, daß die erforderlichen Zwischenabstände im Flaschenstrom klein gehalten werden können, wodurch auch die Flaschentransportgeschwindigkeit bei einer vorgegebenen Leistung niedriger ist, als bei einer Kontrolle der gesamten Flaschenseitenwand mit nur einer Inspektionsstation. Dies ist auf den kleineren Winkel zwischen den Strahlen 6 und 7 zurückzuführen, der gewählt werden kann, z.B. 60 Grad, da die Flaschenseitenwand beim Passieren einer der beiden Inspektionsstationen 1 und 100 nicht vollumfänglich aufgenommen werden muß. Zusätzlich ergeben sich durch den kleineren Winkel optische Vorteile bei der Bildaufnahme. Bei einer Seitenwandkontrolle mit nur einer einzigen Inspektionsstation ist dagegen zwischen den Strahlen 6 und 7 ein Winkel von über 100 Grad zur vollständigen Erfassung einer Flaschenseitenwand erforderlich.

## Patentansprüche

1. Inspektionsmaschine für durchleuchtbare Flaschen (5) oder dgl. mit einer Inspektionsstation (1) zur Seitenwandkontrolle, die eine Beleuchtungseinrichtung (2), eine Bildaufnahmeeinrichtung (3) und eine zwischen einer zu prüfenden Flasche und der Bildaufnahmeeinrichtung angeordnete, Strahlengänge erzeugende Spiegelanordnung aufweist, sowie mit einer die Flaschen (5) einspurig durch die Strahlengänge führenden Transporteinrichtung (4), **gekennzeichnet durch** eine Spiegelanordnung (6a bis 8c), die wenigstens drei, die Seitenwand einer zu prüfenden Flasche aus umfänglich verschiedenen Richtungen auf eine gemeinsame Bildaufnahmeeinrichtung abbildende Strahlengänge erzeugt, wobei die Länge aller Strahlengänge von der Flasche bis zur Bildaufnahmeeinrichtung gleich ist.

2. Inspektionsmaschine nach Anspruch 1, **dadurch gekennzeichnet, daß** sich alle Strahlengänge (6, 7, B) in einem gemeinsamen Kreuzungsbereich (9) schneiden, durch den die Flaschen (5) mittels der Transporteinrichtung (4) hindurchführbar sind.

3. Inspektionsmaschine nach wenigstens einem der vorhergehenden Ansprüche, **dadurch gekennzeichnet, daß** sich die Mittelachsen (6', 7', 8') aller Strahlengänge (6, 7, 8) an einer gemeinsamen Schnittstelle (10) treffen und die Flaschen (5) mittels der Transporteinrichtung (4) durch die Schnittstelle (10) führbar sind, insbesondere derart, daß die symmetrielinie (11) der Flaschen in etwa die Schnittstelle (10) passiert und im Augenblick des Zusammentreffens der Symmetrielinie mit dieser Schnittstelle die Bildaufnahme erfolgt.

4. Inspektionsmaschine nach wenigstens einem der vorhergehenden Ansprüche, **dadurch gekennzeichnet, daß** die Mittelachsen (6', 7', 8') der Strahlengänge von der Bildaufnahmeeinrichtung (3) bis zu einer gemeinsamen Schnittstelle (10) eine übereinstimmende Länge, im Bereich von 750 bis 1500 mm, insbesondere 1240 mm, aufweisen.

5. Inspektionsmaschine nach wenigstens einem der vorhergehenden Ansprüche, **dadurch gekennzeichnet, daß** die optische Achse (12) der Bildaufnahmeeinrichtung (3) sowohl normal zur Transportrichtung der Flaschen in der Inspektionsstation (1) als auch zumindest abschnittsweise quer zur Symmetrielinie (11) der Flaschen (5) ausgerichtet ist.

6. Inspektionsmaschine nach einem der vorhergehenden Ansprüche, **dadurch gekennzeichnet, daß** zwei Strahlengänge (6, 7) symmetrisch zur optischen Achse (12) der Bildaufnahmeeinrichtung (3) ausgebildet sind, die Strahlengänge vorzugsweise jeweils durch zwei zwischen der Bildaufnahmeeinrichtung (3) und der Beleuchtungseinrichtung (2) angeordnete Spiegel (6a, 6b und 7a, 7b) umgelenkt werden, derart, daß die Strahlengänge (6, 7), ausgehend von der Bildaufnahmeeinrichtung, zunächst durch ein erstes Paar von Spiegeln (6a, 7a) von der optischen Achse (12) wegweisend und durch ein nachgeordnetes zweites Paar von Spiegeln (6b, 7b) zur optischen Achse (12) hinweisend auf den Seitenwandbereich einer zu prüfenden Flasche (5) gerichtet werden, wobei die Schnittstelle (10) der Mittelachsen (6', 7') der Strahlengänge insbesondere auf der optischen Achse (12) der Bildaufnahmeeinrichtung (3) liegt.

7. Inspektionsmaschine nach wenigstens einem der vorhergehenden Ansprüche, **dadurch gekennzeichnet, daß** zwischen zwei symmetrisch verlaufenden Strahlengängen (6, 7) ein dritter; vorzugsweise mittig ausgerichteter Strahlengang (8) angeordnet ist, wobei dessen Mittelachse (8') zumindest abschnittsweise, mit der optischen Achse (12) der Bildaufnahmeeinrichtung (3) fluchtet.

8. Inspektionsmaschine nach wenigstens einem der vorhergehenden Ansprüche, **dadurch gekennzeichnet, daß** ein dritter Strahlengang (8) durch zwei auf der optischen Achse (12) der Bildaufnahmeeinrichtung (3) liegende Spiegel (8a, 8c) und einen zwischengeschalteten, neben der optischen Achse (.12) angeordneten Spiegel (8b) umgelenkt wird, wobei der neben der optischen Achse positionierte Spiegel (8b) den Strahlengang (8) vom ersten auf den zweiten der beiden auf der optischen Achse liegenden Spiegel (8a, 8c) umlenkt.

9. Inspektionsmaschine nach wenigstens einem der vorhergehenden Ansprüche 6 bis 8, **dadurch gekennzeichnet, daß** die dem dritten Strahlengang (8) zugeordneten Spiegel (8A, 8B, 8C) - von der Bildaufnahmeeinrichtung 3 zur Beleuchtungseinrichtung 2 gesehen - vor den Spiegeln (6A, 6B, 7A, 7B) der symmetrisch verlaufenden Strahlengänge (6, 7) angeordnet sind.

10. Inspektionsmaschine nach wenigstens einem der vorhergehenden Ansprüche, **dadurch gekennzeichnet, daß** zumindest der auf die Seitenwand einer Flasche auftreffende Abschnitt eines dritten Strahlenganges (8) durch einen Zwischenraum zwischen den den übrigen Strahlengängen (6, 7) zugeordneten Spiegeln (6A, 6B, 7A, 7B) hindurchtreten kann.

11. Inspektionsmaschine nach wenigstens einem der vorhergehenden Ansprüche, **dadurch gekennzeichnet, daß** ein einem dritten Strahlengang (8) zugeordneter Spiegel (8a) vor einem ersten Paar von Spiegeln (6a, 7a) zweier symmetrisch verlaufender Strahlengänge (6, 7) angeordnet ist und ein weiterer Spiegel (8c) dahinter.

12. Inspektionsmaschine nach wenigstens einem der vorhergehenden Ansprüche, **dadurch gekennzeichnet, daß** die optische Achse (12) der Bildaufnahmeeinrichtung (3) abschnittsweise im wesentlichen parallel zur Symmetrielinie (11) der Flaschen (5) ausgerichtet ist und die optische Achse (12) -ausgehend von der Bildaufnahmeeinrichtung (3)- durch einen Spiegel (13) quer zur Symmetrielinie (11) der Flaschen (5) umgelenkt wird.

13. Inspektionsmaschine nach Anspruch 12, **dadurch gekennzeichnet, daß** die Bildaufnahmeeinrichtung (3) seitlich neben der Transporteinrichtung (4) mit Abstand oberhalb deren Förderebene angeordnet ist.

14. Inspektionsmaschine nach wenigstens einem der vorhergehenden Ansprüche, **dadurch gekennzeichnet, daß** zwei Strahlengänge (6, 7) in einem Winkelbereich von 45 bis 80 Grad, insbesondere 60 Grad, bezogen auf ihre Mittelachsen (6', 7'), zueinander ausgerichtet auf eine zu prüfende Flasche (5) treffen.

15. Inspektionsmaschine nach Anspruch 14, **dadurch gekennzeichnet, daß** ein dritter Strahlengang (8) -den von den übrigen Strahlengängen (6, 7) eingeschlossenen Winkel halbierend- auf eine zu prüfende Flasche (5) trifft.

16. Inspektionsmaschine nach wenigstens einem der vorhergehenden Ansprüche, **dadurch gekennzeichnet, daß** die Inspektionsstation (1) eine zweite. Bildaufnahmeeinrichtung (15) zur Kontur- und/oder Höhen- und/oder Farberkennung der Flaschen (5) aufweist, wobei deren Strahlengang (16) durch den Kreuzungsbereich (9) der Strahlengänge (6, 7, 8) der Seitenwandkontrolle verläuft, insbesondere die optische Achse (17) im wesentlichen durch die Schnittstelle (10) der Mittelachsen (6', 7', 8') der Strahlengänge der Seitenwandkontrolle verläuft, so daß die Bildaufnahme einer Flasche durch beide Bildaufnahmeeinrichtungen (3, 15) in etwa zeitgleich erfolgen kann.

17. Inspektionsmaschine nach Anspruch 16, **dadurch gekennzeichnet, daß** die optische Achse (17) der zweiten Bildaufnahmeeinrichtung (15) abschnittsweise im wesentlichen parallel zur Symmetrielinie (11) der Flaschen (5) verläuft und durch einen Spiegel (18) quer zur Symmetrielinie (11) der Flaschen (5) umgelenkt wird.

18. Inspektionsmaschine nach wenigstens einem der Ansprüche 16 oder 17, **dadurch gekennzeichnet, daß** die quer zur Symmetrielinie (11) der Flaschen (5) zusammenlaufenden Abschnitte der optischen Achsen (12, 17) der Bildaufnahmeeinrichtungen (3, 15) einen spitzen Winkel im Bereich von vorzugsweise 15 bis 35 Grad, insbesondere 25 Grad, einschließen.

19. Inspektionsmaschine nach wenigstens einem der vorhergehenden Ansprüche, **dadurch gekennzeichnet, daß** die Spiegel (6a, 6b, 7a, 7b, 8a, 8b, 8c, 13) auf einer gemeinsamen Grundplatte (19) stehend angeordnet sind.

20. Inspektionsmaschine nach Anspruch 19, **dadurch gekennzeichnet, daß** die Spiegel (6a, 6b, 7a, 7b, 8a, 8b, 8c) durch parallel angeordnete, mit Schlitzen ausgestattete Positionierplatten (21) gehalten werden.

21. Inspektionsmaschine nach wenigstens einem der vorhergehenden Ansprüche, **dadurch gekennzeichnet, daß** die Bildaufnahmeeinrichtungen (3, 15) eine Flächenmatrix besitzen, wobei insbesondere die Strahlengänge (6, 7, 8) der Seitenwandkontrolle nebeneinander auf der Flächenmatrix der Bildaufnahmeeinrichtung (3) abgebildet werden.

22. Inspektionsmaschine nach wenigstens einem der vorhergehenden Ansprüche, **dadurch gekennzeichnet, daß** die Bildaufnahme durch elektronische Kameras, insbesondere CCD-Kameras, erfolgt.

23. Inspektionsmaschine nach wenigstens einem der vorhergehenden Ansprüche, **dadurch gekennzeichnet, daß** die Flaschen (5) zur Seitenwandkontrolle nacheinander zwei Inspektionsstationen (1, 100) in unterschiedlichen Drehstellungen durchlaufen.

24. Inspektionsmaschine nach Anspruch 23, **dadurch gekennzeichnet, daß** zwischen den Inspektionsstationen (1, 100) eine Vorrichtung zum Drehen der Flaschen (5) angeordnet ist, vorzugsweise bestehend aus zwei gegenüberliegend an der Mantelfläche der Flaschen angreifenden Riemen (41), die mit unterschiedlicher Geschwindigkeit synchron zur Transporteinrichtung (4) antreibbar sind.

25. Inspektionsmaschine nach Anspruch 24, **dadurch gekennzeichnet, daß** zwischen den an den Flaschen angreifenden Riemen (41) eine Geschwindigkeitsdifferenz zur Drehung der Flaschen einstellbar ist, derart, daß bei einer Umstellung auf Flaschen mit einem anderen Umfangsmaß der Drehwinkel der Flaschen beim Durchlaufen der Riemen (41) konstant bleibt.

## Claims

1. Inspection machine for translucent bottles (5) or the like with an inspection station (1) for side wall checking, which has a lighting device (2), a picture recording device (3) and a mirror assembly which is arranged between a bottle to be examined and the picture recording device and which generates beam paths, and with a transport device (4) which passes the bottles (5) in single file through the beam paths, **characterised by** a mirror assembly (6a to 8c) which generates at least three beam paths which image the side wall of a bottle to be examined from circumferentially different directions onto a common picture recording device, wherein the length of all the beam paths from the bottle to the picture recording device is the same.

2. Inspection machine according to claim 1, **characterised in that** all the beam paths (6, 7, 8) intersect in a common region of crossing (9), through which the bottles (5) can be passed by means of the transport device (4).

3. Inspection machine according to one or more of the preceding claims, **characterised in that** the centre axes (6', 7', 8') of all the beam paths (6, 7, 8) meet at a common point of intersection (10), and the bottles (5) can be passed through the point of intersection (10) by means of the transport device (4), in particular in such a way that the line of symmetry (11) of the bottles passes approximately through the point of intersection (10), and picture recording is effected at the moment of coincidence of the line of symmetry with this point of intersection.

4. Inspection machine according to one or more of the preceding claims, **characterised in that** the centre axes (6', 7', 8') of the beam paths from the picture recording device (3) to a common point of intersection (10) have a corresponding length, within the range from 750 to 1500 mm, in particular 1240 mm.

5. Inspection machine according to one or more of the preceding claims, **characterised in that** the optical axis (12) of the picture recording device (3) is oriented both normal to the direction of transport of the bottles in the inspection station (1) and at least in one section transverse to the line of symmetry (11) of the bottles (5).

6. Inspection machine according to any of the preceding claims, **characterised in that** two beam paths (6, 7) are designed symmetrically to the optical axis (12) of the picture recording device (3), the beam paths are preferably deflected in each case by two mirrors (6a, 6b and 7a, 7b) arranged between the picture recording device (3) and the lighting device (2), in such a way that the beam paths (6, 7), starting from the picture recording device, are directed onto the side wall region of a bottle (5) to be examined, first of all by a first pair of mirrors (6a, 7a) pointing away from the optical axis (12) and by a subsequent second pair of mirrors (6b, 7b) pointing towards the optical axis (12), wherein the point of intersection (10) of the centre axes (6', 7') of the beam paths is located in particular on the optical axis (12) of the picture recording device (3).

7. Inspection machine according to one or more of the preceding claims, **characterised in that** between two symmetrically extending beam paths (6, 7) is arranged a third, preferably centrally oriented beam path (8), wherein the centre axis (8') thereof is aligned in at least one section with the optical axis (12) of the picture recording device (3).

8. Inspection machine according to one or more of the preceding claims, **characterised in that** a third beam path (8) is deflected by two mirrors (8a, 8c) located on the optical axis (12) of the picture recording device (3) and an intermediate mirror (8b) arranged adjacent to the optical axis (12), wherein the mirror (8b) positioned adjacent to the optical axis deflects the beam path (8) from the first to the second of the two mirrors (8a, 8c) located on the optical axis.

9. Inspection machine according to one or more of the preceding claims 6 to 8, **characterised in that** the mirrors (8A, 8B, 8C) associated with the third beam path (8) are arranged in front of the mirrors (6A, 6B, 7A, 7B) of the symmetrically extending beam paths (6, 7) - as seen from the picture recording device 3 to the lighting device 2.

10. Inspection machine according to one or more of the preceding claims, **characterised in that** at least the section of a third beam path (8) impinging on the side wall of a bottle can pass through a gap between the mirrors (6A, 6B, 7A, 7B) associated with the remaining beam paths (6, 7).

11. Inspection machine according to one or more of the preceding claims, **characterised in that** a mirror (8a) associated with a third beam path (8) is arranged in front of a first pair of mirrors (6a, 7a) of two symmetrically extending beam paths (6, 7), and a further mirror (8c) therebehind.

12. Inspection machine according to one or more of the preceding claims, **characterised in that** the optical axis (12) of the picture recording device (3) in one section is oriented substantially parallel to the line of symmetry (11) of the bottles (5), and the optical axis (12) - starting from the picture recording device (3) - is deflected by a mirror (13) transversely to the line of symmetry (11) of the bottles (5).

13. Inspection machine according to claim 12, **characterised in that** the picture recording device (3) is arranged laterally adjacent to the transport device (4) at a distance above the plane of transport thereof.

14. Inspection machine according to one or more of the preceding claims, **characterised in that** two beam paths (6, 7) impinge on a bottle (5) to be examined, oriented to each other within an angular range of 45 to 80 degrees, in particular 60 degrees, referred to their centre axes (6', 7').

15. Inspection machine according to claim 14, **characterised in that** a third beam path (8) - bisecting the angle formed by the remaining beam paths (6, 7) - impinges on a bottle (5) to be examined.

16. Inspection machine according to one or more of the preceding claims, **characterised in that** the inspection station (1) has a second picture recording device (15) for detecting the contour and/or height and/or colour of the bottles (5), wherein the beam path (16) thereof runs through the region of crossing (9) of the beam paths (6, 7, 8) of the side wall checking system, in particular the optical axis (17) runs substantially through the point of intersection (10) of the centre axes (6', 7', 8') of the beam paths of the side wall checking system, so that picture recording of a bottle can be effected by two picture recording devices (3, 15) at approximately the same time.

17. Inspection machine according to claim 16, **characterised in that** the optical axis (17) of the second picture recording device (15) in one section runs substantially parallel to the line of symmetry (11) of the bottles (5) and is deflected by a mirror (18) transversely to the line of symmetry (11) of the bottles (5).

18. Inspection machine according to one or more of claims 16 or 17, **characterised in that** the sections of the optical axes (12, 17) of the picture recording devices (3, 15) which converge transversely to the line of symmetry (11) of the bottles (5) form an acute angle within the range from preferably 15 to 35 degrees, in particular 25 degrees.

19. Inspection machine according to one or more of the preceding claims, **characterised in that** the mirrors (6a, 6b, 7a, 7b, 8a, 8b, 8c, 13) are arranged upright on a common base plate (19).

20. Inspection machine according to claim 19, **characterised in that** the mirrors (6a, 6b, 7a, 7b, 8a, 8b, 8c) are held by parallel positioning plates (21) provided with slots.

21. Inspection machine according to one or more of the preceding claims, **characterised in that** the picture recording devices (3, 15) have a bottle matrix, wherein in particular the beam paths (6, 7, 8) of the side wall checking system are imaged adjacent to each other on the bottle matrix of the picture recording device (3).

22. Inspection machine according to one or more of the preceding claims, **characterised in that** picture recording is effected by electronic cameras, in particular CCD cameras.

23. Inspection machine according to one or more of the preceding claims, **characterised in that** the bottles (5) pass successively through two inspection stations (1, 100) in differential rotational positions for side wall checking.

24. Inspection machine according to claim 23, **characterised in that** between the inspection stations (1, 100) is arranged a device for turning the bottles (5), preferably consisting of two belts (41) which engage the peripheral surface of the bottles in opposite relationship and which can be driven at different speeds synchronously with the transport device (4).

25. Inspection machine according to claim 24, **characterised in that** between the belts (41) engaging the bottles a speed difference can be set for turning the bottles, in such a way that, upon changing to bottles with a different circumferential size, the angle of rotation of the bottles when passing through the belts (41) remains constant.

## Revendications

1. Machine d'inspection pour des bouteilles (5) transparentes ou similaire munie d'un poste d'inspection (1) pour le contrôle de paroi latérale, qui présente un dispositif d'éclairage (2), un dispositif de prise de vue (3) et un agencement de miroirs créant des trajectoires de rayon, disposé entre une bouteille à contrôler et le dispositif de prise de vue, et d'un dispositif de transport (4) guidant les bouteilles (5) sur une voie à travers les trajectoires de rayon, **caractérisée par** un agencement de miroirs (6a à 8c), qui crée au moins trois trajectoires de rayon reproduisant la paroi latérale d'une bouteille à contrôler à partir de directions différentes circonférentiellement sur un dispositif de prise de vue commun, la longueur de toutes les trajectoires de rayon de la bouteille jusqu'au dispositif de prise de vue étant égale.

2. Machine d'inspection selon la revendication 1, **caractérisée en ce que** toutes les trajectoires de rayon (6, 7, 8) se coupent dans une zone de croisement (9) commune à travers laquelle les bouteilles (5) peuvent être acheminées à l'aide du dispositif de transport (4).

3. Machine d'inspection selon au moins l'une des revendications précédentes, **caractérisée en ce que** les axes médians (6', 7', 8') de toutes les trajectoires de rayon (6, 7, 8) se rencontrent en un point d'intersection (10) commun et que les bouteilles (5) peuvent être guidées à travers le point d'intersection (10) à l'aide du dispositif de transport (4), notamment de telle sorte que la ligne de symétrie (11) des bouteilles passe approximativement par le point d'intersection (10) et que la prise de vue ait lieu au moment où la ligne de symétrie coïncide avec ce point d'intersection.

4. Machine d'inspection selon au moins l'une des revendications précédentes, **caractérisée en ce que** les axes médians (6', 7', 8') des trajectoires de rayon présentent du dispositif de prise de vue (3) jusqu'à un point d'intersection (10) commun une longueur concordante, dans la plage de 750 à 1500 mm, notamment de 1240 mm.

5. Machine d'inspection selon au moins l'une des revendications précédentes, **caractérisée en ce que** l'axe optique (12) du dispositif de prise de vue (3) est orienté non seulement normalement à la direction de transport des bouteilles dans le poste d'inspection (1) mais encore au moins par segments transversalement à la ligne de symétrie (11) des bouteilles (5).

6. Machine d'inspection selon l'une des revendications précédentes, **caractérisée en ce que** deux trajectoires de rayon (6, 7) sont configurées symétriquement par rapport à l'axe optique (12) du dispositif de prise de vue (3), que les trajectoires de rayon sont de préférence déviées chacune par deux miroirs (6a, 6b et 7a, 7b) disposés entre le dispositif de prise de vue (3) et le dispositif d'éclairage (2), de telle sorte qu'à partir du dispositif de prise de vue les trajectoires de rayon (6, 7) sont dirigées sur la zone de paroi latérale d'une bouteille à contrôler (5), tout d'abord par une première paire de miroirs (6a, 7a) de manière à s'écarter de l'axe optique (12) et par une deuxième paire de miroirs (6b, 7b) disposée en aval de manière à s'approcher de l'axe optique (12), le point d'intersection (10) des axes médians (6', 7') des trajectoires de rayon se trouvant notamment sur l'axe optique (12) du dispositif de prise de vue (3).

7. Machine d'inspection selon au moins l'une des revendications précédentes, **caractérisée en ce qu'**une troisième trajectoire de rayon (8), de préférence médiane, est disposée entre deux trajectoires de rayon (6, 7) s'étendant symétriquement, l'axe médian (8') de celle-ci étant aligné au moins par segments avec l'axe optique (12) du dispositif de prise de vue (3).

8. Machine d'inspection selon au moins l'une des revendications précédentes, **caractérisée en ce qu'**une troisième trajectoire de rayon (8) est déviée par deux miroirs (8a, 8c) se trouvant sur l'axe optique (12) du dispositif de prise de vue (3) et un miroir (8b) intercalé disposé à côté de l'axe optique (12), le miroir (8b) positionné à côté de l'axe optique déviant la trajectoire de rayon (8) du premier au deuxième des deux miroirs (8a, 8c) se trouvant sur l'axe optique.

9. Machine d'inspection selon au moins l'une des revendications 6 à 8, **caractérisée en ce que** les miroirs (8A, 8B, 8C) associés à la troisième trajectoire de rayon (8) - vus du dispositif de prise de vue (3) vers le dispositif d'éclairage (2) - sont disposés avant les miroirs (6A, 6B, 7A, 7B) des trajectoires de rayon (6, 7) s'étendant symétriquement.

10. Machine d'inspection selon au moins l'une des revendications précédentes, **caractérisée en ce qu'**au moins le segment d'une troisième trajectoire de rayon (8) rencontrant la paroi latérale d'une bouteille peut passer à travers un intervalle entre les miroirs (6A, 6B, 7A, 7B) associés aux trajectoires de rayon (6, 7) restantes.

11. Machine d'inspection selon au moins l'une des revendications précédentes, **caractérisée en ce qu'**un miroir (8a) associé à une troisième trajectoire de rayon (8) est disposé avant une première paire de miroirs (6a, 7a) des deux trajectoires de rayon (6, 7) s'étendant symétriquement et un autre miroir (8c) en aval.

12. Machine d'inspection selon au moins l'une des revendications précédentes, **caractérisée en ce que** l'axe optique (12) du dispositif de prise de vue (3) est orienté par segments essentiellement parallèlement à la ligne de symétrie (11) des bouteilles (5) et que l'axe optique (12) est dévié transversalement à la ligne de symétrie (11) des bouteilles (5) par un miroir (13) - à partir du dispositif de prise de vue (3).

13. Machine d'inspection selon la revendication 12, **caractérisée en ce que** le dispositif de prise de vue (3) est disposé latéralement à côté du dispositif de transport (4) à une certaine distance au-dessus de son plan de transport.

14. Machine d'inspection selon au moins l'une des revendications précédentes, **caractérisée en ce que** deux trajectoires de rayon (6, 7) rencontrent une bouteille (5) à contrôler en étant orientées l'une vers l'autre dans une plage angulaire de 45 à 80 degrés, notamment à 60 degrés par rapport à leurs axes médians (6', 7').

15. Machine d'inspection selon la revendication 14, **caractérisée en ce qu'**une troisième trajectoire de rayon (8) - divisant par moitiés l'angle compris entre les trajectoires de rayon (6, 7) restantes - rencontre une bouteille (5) à contrôler.

16. Machine d'inspection selon au moins l'une des revendications précédentes, **caractérisée en ce que** le poste d'inspection (1) présente un deuxième dispositif de prise de vue (15) pour la détection de contour et/ou de hauteur et/ou de couleur des bouteilles (5), sa trajectoire de rayon (16) s'étendant à travers la zone de croisement (9) des trajectoires de rayon (6, 7, 8) de contrôle de paroi latérale, l'axe optique (17) s'étendant notamment essentiellement à travers le point d'intersection (10) des axes médians (6', 7', 8') des trajectoires de rayon de contrôle de paroi latérale, de sorte que la prise de vue d'une bouteille peut avoir lieu à peu près au même moment grâce aux deux dispositifs de prise de vue (3, 15).

17. Machine d'inspection selon la revendication 16, **caractérisée en ce que** l'axe optique (17) du deuxième dispositif de prise de vue (15) s'étend par segments essentiellement parallèlement à la ligne de symétrie (11) des bouteilles (5) et est dévié transversalement par rapport à la ligne de symétrie (11) des bouteilles (5) par un miroir (18).

18. Machine d'inspection selon au moins l'une des revendications 16 ou 17, **caractérisée en ce que** les segments des axes optiques (12, 17) des dispositifs de prise de vue (3, 15) convergeant transversalement à la ligne de symétrie (11) des bouteilles (5) délimitent un angle aigu de 15 à 35 degrés de préférence, notamment de 25 degrés.

19. Machine d'inspection selon au moins l'une des revendications précédentes, **caractérisée en ce que** les miroirs (6a, 6b, 7a, 7b, 8a, 8b, 8c, 13) sont disposés debout sur une plaque de base (19) commune.

20. Machine d'inspection selon la revendication 19, **caractérisée en ce que** les miroirs (6a, 6b, 7a, 7b, 8a, 8b, 8c) sont maintenus par des plaques de positionnement (21) munies de fentes, disposées parallèlement.

21. Machine d'inspection selon au moins l'une des revendications précédentes, **caractérisée en ce que** les dispositifs de prise de vue (3, 15) possèdent une matrice de surface, les trajectoires de rayon (6, 7, 8) du contrôle de paroi latérale étant notamment représentées les unes à côté des autres sur la matrice de surface du dispositif de prise de vue (3).

22. Machine d'inspection selon au moins l'une des revendications précédentes, **caractérisée en ce que** la prise de vue se fait par des caméras électroniques, notamment des caméras à CCD.

23. Machine d'inspection selon au moins l'une des revendications précédentes, **caractérisée en ce que** pour le contrôle de paroi latérale les bouteilles (5) traversent les unes après les autres deux postes d'inspection (1, 100) dans des positions de rotation différentes.

24. Machine d'inspection selon la revendication 23, **caractérisée en ce qu'**un dispositif pour tourner les bouteilles (5) est disposé entre les postes d'inspection (1, 100), constitué de préférence de deux courroies (41) en vis-à-vis venant en prise sur les surfaces d'enveloppe des bouteilles, les courroies pouvant être entraînées de manière synchrone au dispositif de transport (4) à des vitesses différentes.

25. Machine d'inspection selon la revendication 24, **caractérisée en ce qu'**une différence de vitesse peut être réglée entre les courroies (41) venant en prise sur les bouteilles pour tourner les bouteilles, de telle sorte que lors de l'adaptation aux bouteilles présentant une mesure circonférentielle différente, l'angle de rotation des bouteilles reste constant lors de la circulation des courroies (41).
